# EUROPEAN PATENT SPECIFICATION

(11) **EP 1 542 821 B1**
(45) Date of publication and mention of the grant of the patent: **18.11.2009**
(21) Application number: 03748824.4
(22) Date of filing: 26.09.2003
(51) Int. Cl.: B23B 47/34, B23Q 11/02, B23Q 11/00, B23D 59/00

(54) **AN ASSEMBLY FOR REMOVING CHIPS FROM A CUTTING WORK AREA OF A CUTTING TOOL**
ANORDNUNG ZUR ENTFERNUNG VON SPÄNEN AUS EINEM SCHNEIDARBEITSBEREICH EINES SCHNEIDWERKZEUGS
ENSEMBLE PERMETTANT DE RETIRER LES COPEAUX DE LA ZONE DE TRAVAIL D'UN OUTIL DE COUPE

(30) Priority: 27.09.2002 US 319579 P; 30.09.2002 US 414408 P
(43) Date of publication of application: 22.06.2005
(73) Proprietor: Novator AB, 163 55 Spaanga (SE)
(72) Inventor: HANSSON, Jonas, S-164 72 KISTA (SE); ROSWALL, Göran, S-165 76 HÄSSELBY (SE)
(74) Representative: Börlin, Maria
(86) International application number: PCT/SE2003/001500
(87) International publication number: WO 2004/028728

(56) References cited:
- GB-A- 2 096 030
- US-A1- 2001 052 429
- US-B1- 6 200 075
- DATABASE WPI Week 198851, Derwent Publications Ltd., London, GB; Class P56, AN 1988-367580, XP002971941 & SU 1 404 267 A (KIEV POLY) 23 June 1988
- DATABASE WPI Week 198440, Derwent Publications Ltd., London, GB; Class P56, AN 1984-248553, XP002971942 & SU 1 071 395 A (IZRAILEVICH V L) 07 February 1984

## Description

### Technical field

The present invention relates to an assembly for removing chips and cuttings from a cutting working area of a cutting tool on a workpiece. The assembly of the present invention is adapted to be attached to either an axially movable, non-rotating component of a drilling/milling machine and be resiliently biased towards a workpiece in which a hole or a recess is to be formed, or to be attached to a separate fixed support or stand located close to the workpiece and be resiliently biased towards the machine. In particular, but not exclusively, the assembly is adapted to be used together with orbital drilling machines.

### Background of the invention

When forming holes or recesses in a workpiece by means of a drilling or milling machine chips and cuttings generated by a cutting tool and remaining in the vicinity of the hole during the forming thereof can adversely effect the surface quality of the hole being formed.

### Summary of the invention

An object of the present invention is to provide a chips-removing assembly, which can efficiently collect and remove chips from a cutting working area while at the same time obtaining a full protection of the cutting tool in the zone between an advancing nose portion of the machine and the workpiece during a working operation.

For this purpose the assembly of the present invention comprises, in its simplest form, a support structure for supporting a first end of an axially expandable and collapsible tubular member; a cross-piece for supporting a second end of the tubular member; at least one biasing spring configured and arranged for resiliently biasing the support structure and the cross-piece away from one another; a housing with a chips-receiving chamber located adjacent one of said ends of the tubular member for engagement with the working area of the workpiece, an outlet from the chamber of the housing being configured to be connected to a vacuum source for removing chips from the chamber; and a hub portion located at the other of said ends of the tubular member for engagement with a cutting machine. During the working operating the tubular member surrounds the shaft of the cutting tool and defines a space which is substantially closed against a nose portion (e.g. a rotating spindle) of the working machine and which communicates with the chips-receiving chamber so as to improve the evacuation of chips therein and to create a safe protection for the operator in case of a breakdown of the cutting tool.

Further features and suitable embodiments of the assembly of the present invention are defined in the claims and will be described more in detail in the following description under reference to the accompanying drawings.

### Brief description of the drawings

Fig. 1 is a perspective view of a first, simple embodiment of the assembly of the present invention;
Fig. 2 is perspective view of a second embodiment of the assembly of the invention, as seen from a frontal side;
Fig. 3 is perspective view of the second embodiment of the assembly of the invention, as seen from a rear side;

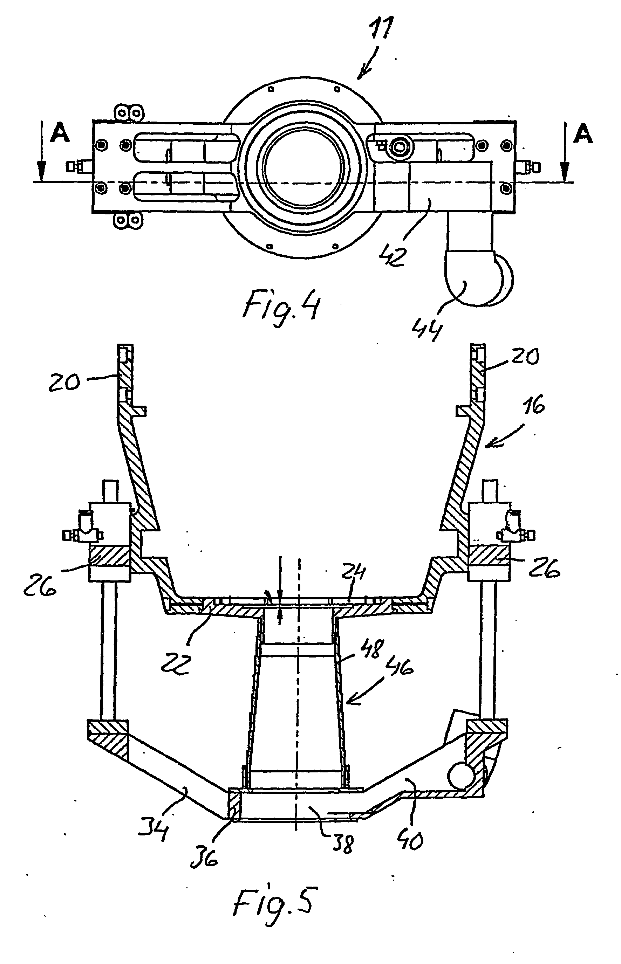

Fig. 4 is an end view of the second embodiment of the assembly;
Fig. 5 is a cross-sectional view taken along the line A-A in Fig. 4;
Fig. 6 is a perspective view of an orbital drilling machine to which the assembly of Fig. 2-5 is attached.
Fig. 7 is a perspective view similar to Fig. 6 and illustrates a similar orbital drilling machine coordinated with a third embodiment of a cuttings-removing assembly of the present invention;
Fig. 8 and 9 are perspective views of the assembly of Fig. 7, seen from the rear side thereof and in an axially collapsed and expanded position, respectively; and
Fig. 10 is a side view of a front portion of an orbital cutting machine and the third embodiment of the assembly in a retracted, unexpanded position in which a tool exchanging operation may take place.

### Detailed description of preferred embodiments

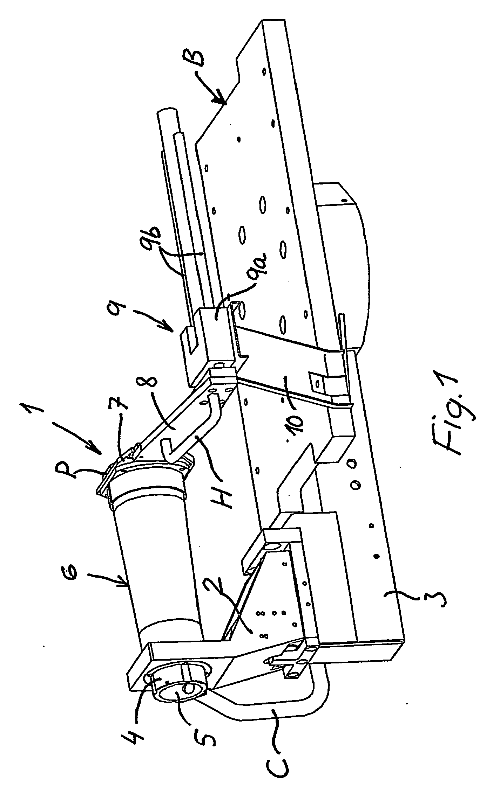

Fig. 1 illustrates a first, simple embodiment of the assembly 1 of the present invention, comprising a support structure 2 carried on a stand 3 that can be positioned close to a workpiece (not shown). The support structure 2 holds a housing 4 with a chips-receiving chamber 5 and one end of an axially expandable and collapsible, tubular member 6 consisting of a helically wound strip of steel or similar strong material so as to form a telescopic spring which is resiliently biased towards it expanded condition shown in Fig. 1. The other end of the tubular member 6 carries a hub portion 7 with a pressure plate P configured to engage a front portion, e.g. an end surface of a spindle, of a cutting machine (not shown). The hub portion 7 is attached to a cross-piece 8 which connects the hub portion 7 to a linear guide unit 9 at one side of the cutting machine for longitudinal guidance of the expansion and collapsing of the tubular member 6. A guide block 9a of the guide unit 9 is supported on a bracket 10 secured to a stationary machine base B. Guide rods 9b attached to the cross-piece 8 are slideable in the guide block 9a. A handle H is attached to the cross-piece 8 for manually compressing the tubular member 6. Alternately, this could be achieved by a pneumatic cylinder (not shown) which facilitates an exchange of a cutting tool in the machine. A vacuum conduit C is connected to the chips-receiving chamber 5 for removing chips and cuttings from the working area of the workpiece.

In use the housing 4 is set into engagement with the surface of the workpiece where a hole or recess is to be formed therein. The telescopic tubular member 6 is allowed to axially expand over the cutting tool and its shaft (not shown) so as to bring the pressure plate P to resiliently engage the advancing spindle of the cutting machine. During the advancement of the cutting tool into the workpiece the tubular member 6 will axially collapse successively against the action of the spring force of the resilient member 6. The tubular member 6 forms both a confined space communicating with the chips-receiving chamber 5 so as to improve the evacuation of chips therein, and a strong protection of the cutting tool in a zone between an advancing nose portion of the machine and the workpiece during a working operation.

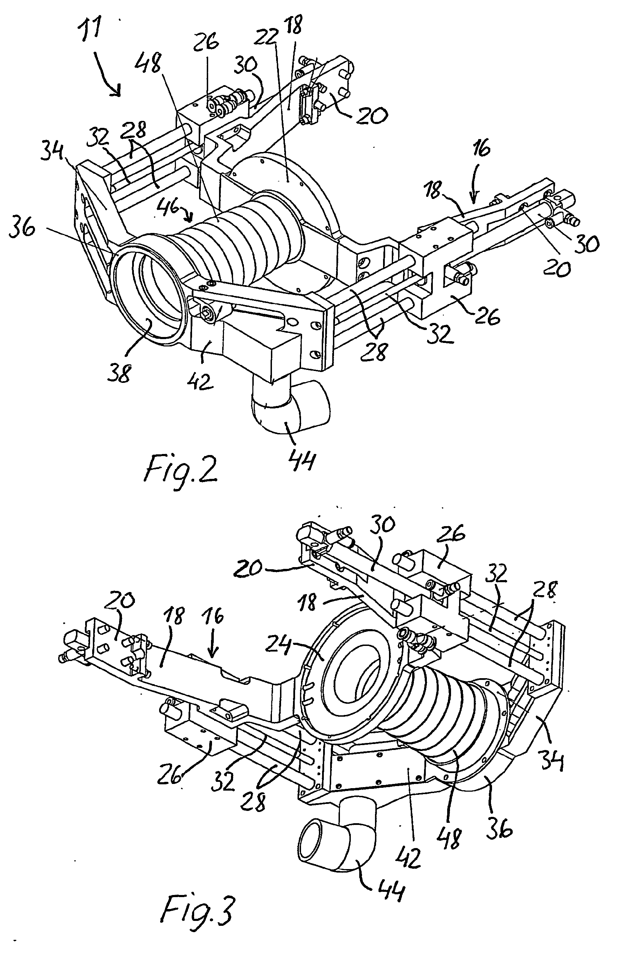

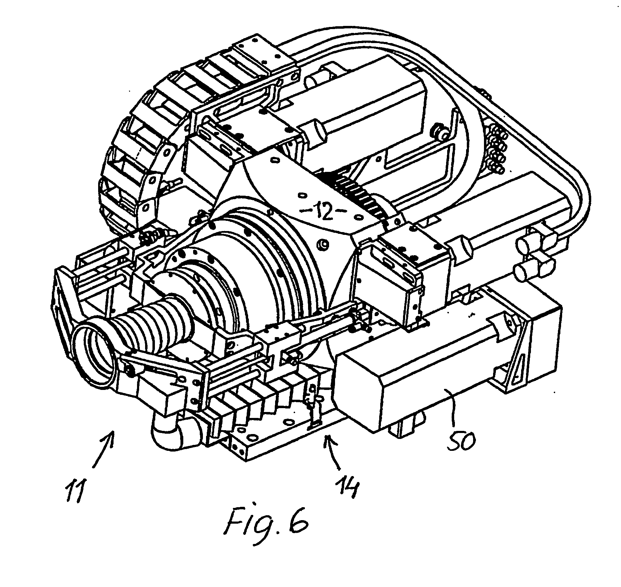

Figs. 2 and 3 are perspective views of a second embodiment of the assembly 11 of the invention. The assembly 11 is adapted to be attached to a front portion of an outer housing 12 of an orbital drilling machine 14 (Fig. 6), or any other type of material working machine for drilling or milling holes or recesses in a workpiece, where cuttings and chips are to be removed from the working area.

The assembly 11 comprises a U-shaped support structure 16 having two opposed side legs 18 with a rear fastening section 20 for fixating the support structure 16 to the axially movable housing 12 of the machine 14. The legs 18 are interconnected by a central hub portion 22 which has a cylindrical recess 24 for receiving a front end of an orbiting spindle carrying a rotary cutting tool (not shown) with a small axial play between the bottom of the recess and the end of the spindle. To the outer side of each leg 18 is mounted a respective guide block 26 for linear guidance of two guide rods 28. A cylinder 30 of a pneumatic spring generating a substantially constant spring force is attached to the rear end of each leg 18 and to the guide block 26 and has a piston rod 32 extending through the block 26. The guide rods 28 and the piston rod 32 are fixated to a respective end of a yoke-shaped pressure foot 34, which interconnects the two pairs of guide rods 28 and the piston rods 32. The pressure foot 34 carries a central circular housing 36 defining a chamber 38 for receiving cuttings from the hole or recess being formed in a workpiece against which the pressure foot 34 is biased by the pneumatic springs 30, 32. The chamber 38 communicates with a channel 40, which extends through a branch 42 of the pressure foot 34 and is connected to a vacuum source (not shown) via a tubular outlet socket 44.

The one end of an axially expandable and collapsible tubular member 46 is attached to the central housing 36, while the other end is attached to the central hub portion 22 of the support structure 16. The tubular member 46 is configured to accommodate the cutting tool and to define a substantially closed space around it, which could be reduced in volume when the cutting tool advances into the workpiece. The tubular member 46 preferably consists of a telescopic spring made of a helically wound strip 48 of a spring material, such as spring steel. Such a tubular member 46 may easily be collapsed to an axial dimension substantially equal to the width of the strip 48. Alternatively, the tubular member 46 may be formed as a resilient bellows. In its most expanded position the axial length of the tubular member 46 is such that the tip of the cutting tool mounted to the orbiting spindle will not protrude from the surface of the central housing 36 which engages the workpiece.

When starting a hole-forming procedure the pressure foot 34 is held at a maximal extended position relative to the drilling machine by means of the pneumatic springs 30,32. The housing 12 of the orbital drilling machine 14 is fed axially towards the workpiece by an axial feed motor 50 (Fig. 6) until the pressure foot 34 slightly compresses the tubular member 46 when it contacts the surface of the workpiece. During further axial advancement of the cutting tool into the workpiece, the guide blocks 26 will slide forwardly along the guide rods 28 against the constant spring force of the pneumatic springs 30, 32, while collapsing the tubular member 46 axially. Cuttings and chips generated by the cutting tool will be removed by the vacuum source via the chamber 38, channel 40 and the outlet socket 44 during the whole cutting operation so that the hole will not be jammed thereby and the environment will be protected from being polluted.

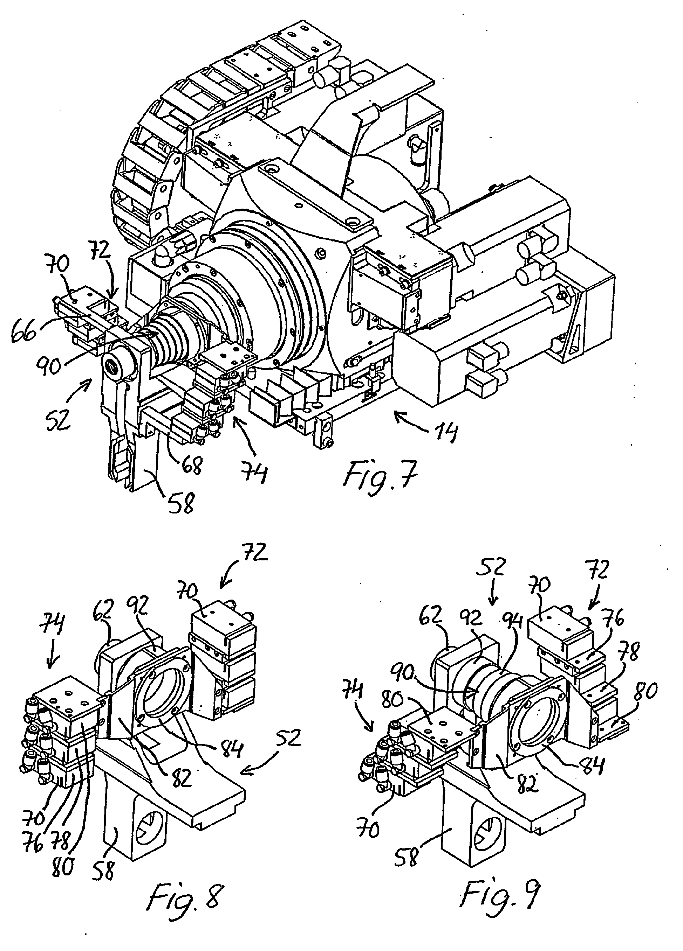

Fig. 7 is a perspective view similar to Fig. 6 and illustrates a similar orbital drilling machine 14 coordinated with a third embodiment of a cuttings-removing assembly 52 of the present invention. Figs. 8 and 9 are perspective views of this assembly, seen from the rear side thereof and in an axially collapsed and expanded position, respectively.

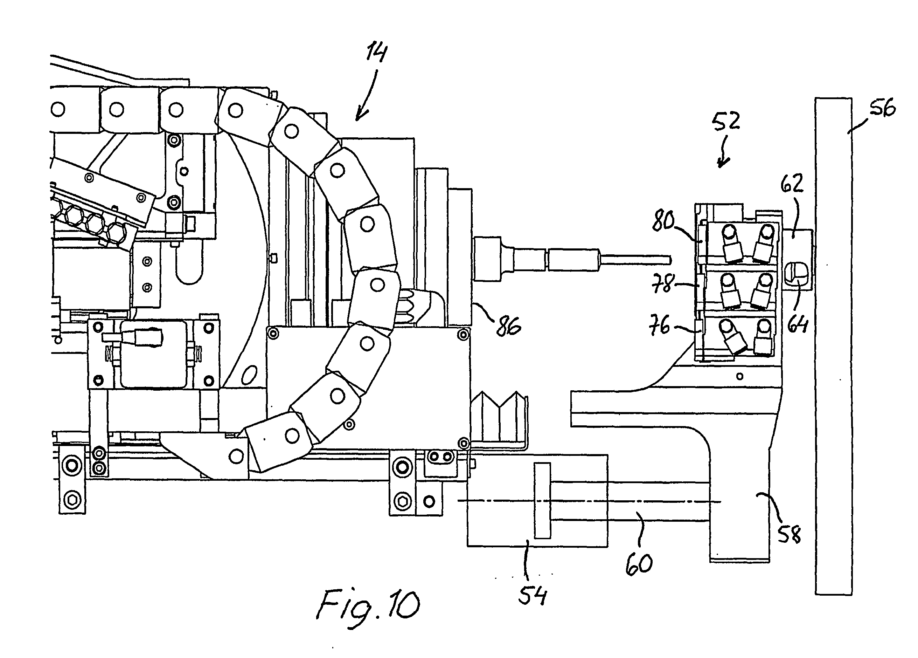

In contrast to the second embodiment, the assembly 52 of the third embodiment is configured to be mounted to a support 54, which is fixed relative to the workpiece 56 during the working of a hole therein. The assembly 52 comprises a central upright member 58 attached to the support 54 via an axially adjustable piston rod 60 (Fig. 10). A cylindrical housing 62 defining a chamber for receiving cuttings from the hole or recess being formed is mounted at the top of the upright 58 facing the workpiece 56. The housing 62 has an outlet opening 64 which is connected to a vacuum source via a hose (not shown) for removing the cuttings from the working area. An upper and a lower lateral bracket 66 and 68 are attached to the upright 58 for holding a respective upper and lower, fixed end section 70 of a telescopic pneumatic spring unit 72 and 74. Each spring unit 72, 74 further comprises three sections 76, 78, 80 which are axially extendable by separate pneumatic cylinders. The outermost sections 80 of the spring units are carrying between them a cross-piece 82 having a central ring-shaped pressure plate 84 to be engaged by the outer end surface 86 of the orbiting spindle of the drilling machine. As best seen in Figs. 7 and 9, the telescoping sections 76, 78, 80 of the spring unit 72 form, in its expanded condition, a stair going downwards, while the corresponding sections of the spring unit 74 form a stair going upwards.

The cross-piece 82 also holds one end 88 of an axially expandable and collapsible tubular member 90, the other end 92 of which is attached to the upright 58 concentrically to housing 62. Like in the first and second embodiments, the tubular member 90 is configured to accommodate the cutting tool and to define a substantially closed space around it, which could be reduced in volume when the cutting tool advances into the workpiece. Thus, the tubular member 90 preferably consists of a telescopic spring made of a helically wound strip 94 of a spring material, such as spring steel. Such a tubular member 90 may easily be collapsed to an axial dimension substantially equal to the width of the strip 94.

The pneumatic spring units 72, 74 are adapted to generate a substantially constant spring force that bias the tubular member 90 towards the end surface 86 of the tool spindle through the pressure plate 84. As shown in Fig. 10, which is a side elevational view showing the mutual positions of the assembly 52 and the drilling machine 14 during a tool changing phase, the telescopic spring sections 76, 78, 80 may be retracted by their respective cylinders to provide a free space between the assembly 52 and the drilling machine for enable easy exchange of the cutting tool.

It should be noted that the pneumatic springs 30 and spring units 72, 74 referred to above could alternatively be formed as hydraulic or electric units for controlling the expansion and retraction of the tubular member 46, 90.

## Claims

1. An assembly for removing chips from a cutting tool working area on a workpiece, comprising: a support structure (2; 16; 54, 58, 60) for supporting a first end of an axially expandable and collapsible tubular member (6; 46; 90); a cross-piece (8; 34; 82) for supporting a second end of the tubular member (2; 46; 90); at least one biasing spring (6; 30, 32; 46; 72, 74; 90) configured and arranged for resiliently biasing the support structure (2; 16; 58) and the cross-piece (8; 34; 82) away from one another; a housing (4; 36; 62) with a chips-receiving chamber (5; 38) located adjacent one of said ends of the tubular member (6; 46; 90) for engagement with the working area of the workpiece, an outlet (C; 40, 44) from the chamber (5; 38) of the housing being configured to be connected to a vacuum source for removing chips from the chamber; and a hub portion (7; 22; 84) located at the other of said ends of the tubular member for engagement with a cutting machine.

2. The assembly according to claim 1, wherein the biasing spring itself constitutes the axial expandable and collapsible tubular member (6) and is configured as a telescopic resilient spring made of a helically wound strip.

3. The assembly according to claim 1, wherein the support structure (2; 54, 58, 60) is carrying the housing (4; 62) with the chips-receiving chamber (5) and is arranged to be fixated close to the working area of the workpiece, whereas the cross-piece (8; 82) is carrying the hub portion (7; 84) for a biased engagement with the cutting machine.

4. The assembly according to claim 1, wherein the cross-piece (34) is carrying the housing (36) with the chips-receiving chamber (38) for a biased engagement with the working area of the workpiece, whereas the support structure (16) is configured to be mounted to an axially movable, non-rotating component (12) of the cutting machine (14) and is carrying the hub portion (22) adjacent a spindle of the cutting machine.

5. The assembly according to claim 3, wherein the at least one biasing spring comprises a pneumatic telescopic cylinder unit (72, 74) attached at one end thereof to the support structure (58) and at the other end to the cross-piece (82).

6. The assembly according to claim 5, wherein one telescopic cylinder unit (72, 74) is arranged on each side of the tubular member (90).

7. The assembly according to claim 4, wherein guide members (26, 28) are attached to the support structure (16) and the cross-piece (34) in order to facilitate a mutual linear displacement of the support structure (16) and the cross-piece (34).

8. The assembly according to claim 7, wherein the support structure (16) comprises a U- shaped bracket having side legs (18) interconnected by the hub portion (22) and provided with a section (20) for fixation of the support structure (16) to a non-rotating component (12) of the cutting machine.

9. The assembly according to claim 8, wherein the cross-piece (34) comprises a yoke member with the housing (36) located centrally on the yoke, said guide members including guide rods (28) attached to opposite end sections of the yoke, and guide blocks (26) attached to the support structure (16) for interaction with the guide rods (28).

10. The assembly according to any one of claims 7-9, wherein the at least one biasing spring comprises a pneumatic telescopic cylinder unit (30, 32) attached at one end thereof to the support structure (16) and at the other end to the cross-piece (22).

11. The assembly according to claim 10, wherein one telescopic cylinder unit (30, 32) is arranged on each side of the tubular member (46).

## Patentansprüche

1. Anordnung zum Entfernen von Spänen aus einem Arbeitsbereich auf einem Arbeitsstück von einem Schneidwerkzeug, die umfasst: eine Unterstützungsstruktur (2; 16; 54, 58, 60) zum Unterstützen eines ersten Endes eines axial ausziehbaren und zusammenziehbaren röhrenförmigen Elements (6; 46; 90); ein Querteil (8; 34; 82) zum Unterstützen eines zweiten Endes des röhrenförmigen Elements (2; 46; 90); wenigstens eine Vorspannfeder (6; 30, 32; 46; 72, 74; 90), die zum elastischen Verspannen der Unterstützungsstruktur (2; 16; 58) und des Querteils (8; 34; 82) voneinander weg aufgebaut und angeordnet ist; ein Gehäuse (4; 36; 62) mit einer Kammer zum Aufnehmen von Spänen (5; 38), die zum Eingriff mit dem Arbeitsbereich des Werkstücks benachbart zu einem der Enden des röhrenförmigen Elements (6; 46; 90) positioniert ist, wobei ein Auslass (C; 40; 44) von der Kammer (5; 38) des Gehäuses ausgebaut ist, um zum Entfernen von Spänen aus der Kammer mit einer Vakuumquelle verbunden zu sein; und einen Sitzabschhitt (7; 22; 84), der zum Eingriff mit einer Schneidmaschine an dem anderen der Enden des röhrenförmigen Elements positioniert ist.

2. Anordnung nach Anspruch 1, bei der die Vorspannfeder selbst das axial ausziehbare und einziehbare röhrenförmige Element (6) bildet und als eine elastische Teleskopfeder, die aus einem spiralförmig gewickelten Band gefertig ist, aufgebaut ist.

3. Anordnung nach Anspruch 1, bei der die Unterstützungsstruktur (2; 54, 58, 60) das Gehäuse (4; 62) mit der Kammer zum Aufnehmen der Späne (5) trägt und angeordnet ist, um nahe an dem Bearbeitungsbereich des Werkstücks befestigt zu sein, wobei das Querteil (8; 82) den Sitzabschnitt (7; 84) für einen Vorspanneingriff mit der Schneidmaschine trägt.

4. Anordnung nach Anspruch 1, bei der das Querteil (34) das Gehäuse (36) mit der Kammer zum Aufnehmen von Spänen (38) für einen Vorspahneingriff mit dem Arbeitsbereich des Werkstücks trägt, wobei die Unterstützungsstruktur (16) aufgebaut ist, um an einer axial bewegbaren, sich nicht drehenden Komponente (12) der Schneidmaschine (14) angebracht zu sein, und den Sitzabschnitt (22) benachbart zu einer Spindel der Schneidmaschine trägt.

5. Anordnung nach Anspruch 3, bei der wenigstens eine Vorspannfeder eine pneumatische zylindrische Teleskopeinheit (72, 74) umfasst, die an einem Ende an der Unterstützungsstruktur (58) und an dem anderen Ende an dem Querteil (82) angebracht ist.

6. Anordnung nach Anspruch 5, bei der eine zylindrische Teleskopeinheit (72, 47) auf jeder Seite des röhrenförmigen Elements (90) angeordnet ist.

7. Anordnung nach Anspruch 4, bei der Führungselemente (26, 28) an der Unterstützungsstruktur (16) und dem Querteil (34) angebracht sind, um eine gegenseitige lineare Versetzung der Unterstützungsstruktur (16) und des Querteils (34) zu vereinfachen.

8. Anordnung nach Anspruch 7, bei der die Unterstützungsstruktur (16) eine U-förmige Klammer umfasst, die Seltenfüße (18) aufweist, die durch den Sitzabschnitt (22) miteinander verbunden sind und mit einem Abschnitt (20) zur Befestigung der Unterstützungsstruktur (16) an einer sich nicht drehende Komponente (12) der Schneidmaschine vorgesehen sind.

9. Anordnung nach Anspruch 8, bei der das Querteil (34) ein Jochelement, wobei das Gehäuse (36) zentral an dem Joch positioniert ist, wobei die Führungselemente Führungsstäbe (28) enthalten, die an entgegengesetzten Endbereichen des Jochs angebracht sind, und Führungsblöcke (26) umfasst, die an der Unterstützungsstruktur (16) für ein Zusammenwirken mit den Führungsstäben (28) angebracht sind.

10. Anordnung nach einem der Ansprüche 7 bis 9, bei der die wenigstens eine Vorspannfeder eine pneumatische zylindrische Teleskopeinheit (30, 32) umfasst, die an einem Ende davon an der Unterstützungsstruktur (16) und an dem anderen Ende an dem Querteil (22) angebracht ist.

11. Anordnung nach Anspruch 10, bei der eine zylinderische Teleskopeinneit (30, 32) auf jeder Seite des röhrenförmige Elements (46) angeordnet ist.

## Revendications

1. Ensemble permettant de retirer des copeaux d'une zone de travail d'un outil à découper sur une pièce à usiner, comprenant : une structure de support (2 ; 16 ; 54, 58, 60) pour supporter une première extrémité d'un élément tubulaire expansible et compressible axialement (6 ; 46 ; 90) ; une entretoise (8; 34 ; 82) pour supporter une deuxième extrémité de l'élément tubulaire (2 ; 46 ; 30) ; au moins un ressort de sollicitation (6; 30, 32; 46 ; 72, 74 ; 90) configuré et agencé pour solliciter élastiquement la structure de support (2; 16 ; 58) et l'entretoise (8 ; 34 ; 82) à distance l'une de l'autre ; un carter (4 ; 36; 62) avec une chambre de réception de copeaux (5 ; 38) située de manière adjacente à l'une desdites extrémités de l'élément tubulaire (6 ; 46 ; 90) pour une mise en prise avec la zone de travail de la pièce à usiner, une sortie (C ; 40, 44) de la chambre (5; 38) du carter étant configurée pour être reliée à une source de dépression pour retirer des copeaux de la chambre ; et une partie de moyeu (7 ; 22 ; 84) située à l'autre extrémité desdites extrémités de l'élément tubulaire pour une mise en prise avec une machine à découper.

2. Ensemble selon la revendication 1, dans lequel le ressort de sollicitation constitue en lui-même l'élément tubulaire expansible et compressible axialement (6) et est configuré comme un ressort élastique télescopique fait d'une bande hélicoïdale

3. Ensemble selon la revendication 1, dans lequel la structure de support (2 ; 54, 58, 60) supporte le carter (4 ; 62) avec la chambre de réception de copeaux (5) et est agencée pour être fixée à proximité de la zone de travail de la pièce à usiner, tandis que l'entretoise (8 ; 82) supporte la partie de moyeu (7 ; 84) pour une mise en prise sous contrainte avec la machine à découper.

4. Ensemble selon la revendication 1, dans lequel l'entretoise (34) supporte le carter (36) avec la chambre de réception de copeaux (38) pour une mise en prise sous contrainte avec la zone de travail de la pièce à usiner, tandis que la structure de support (16) est configurée pour être montée sur un composant non rotatif, mobile axialement (12) de la machine à découper (14) et supporte la partie de moyeu (22) adjacente à une fusée de la machine à découper.

5. Ensemble selon la revendication 3, dans lequel l'au moins un ressort de sollicitation comprend une unité de cylindre coulissante pneumatique (72, 74) fixé à l'une des extrémités de celui-ci à la structure de support (58) et à l'autre extrémité à l'entretoise (82).

6. Ensemble selon la revendication 5, dans lequel une unité de cylindre coulissante (72, 74) est agencée sur chaque côté de l'élément tubulaire (90).

7. Ensemble selon la revendication 4, dans lequel des éléments de guidage (26, 28) sont fixés à la structure de support (16) est à l'entretoise (34) afin de faciliter un déplacement linéaire mutuel de la structure de support (16) et de l'entretoise (34).

8. Ensemble selon la revendication 7, dans lequel la structure de support (16) comprend une attache en forme de U ayant des pattes latérales (18) reliées les unes aux autres par la partie de moyeu (22) et muni d'une section (20) pour la fixation de la structure de support (16) à un composant non rotatif (12) de à machine à découper.

9. Ensemble selon la revendication 8, dans lequel l'entretoise (34) comprend un élément d'étrier avec le carter (36) situé centralement sur l'étrier, lesdits éléments de guidage comprenant des tiges de guidage (28) fixées aux sections d'extrémité opposées de l'etrier, et des blocs de guidage (26) fixés à la structure de support (16) pour une interaction avec les tiges de guidage (28).

10. Ensemble selon l'une quelconque des revendications 7 à 9, dans lequel l'au moins un ressort de sollicitation comprend une unité de cylindre coulissante pneumatique (30, 32) fixée à l'une extrémité de celui-ci à la structure de support (16) et à l'autre extrémité à l'entretoise (22).

11. Ensemble selon la revendication 10, dans lequel une unité de cylindre coulissante (30, 32) est agencée sur chaque côté de l'élément tubulaire (46).
